# EUROPÄISCHE PATENTSCHRIFT

(11) **EP 1 292 517 B1**
(45) Veröffentlichungstag und Bekanntmachung des Hinweises auf die Patenterteilung: **17.09.2003**
(21) Anmeldenummer: 01943121.2
(22) Anmeldetag: 19.05.2001
(51) Int. Cl.: B65G 47/90, B25J 17/02

(54) **VORRICHTUNG ZUR AUTOMATISCHEN ENTNAHME VON GEGENSTÄNDEN AUS BEHÄLTERN**
DEVICE FOR THE AUTOMATIC REMOVAL OF OBJECTS FROM CONTAINERS
DISPOSITIF DE PRELEVEMENT AUTOMATIQUE D'OBJETS SITUES DANS DES CONTENEURS

(30) Priorität: 26.05.2000 DE 10026098
(43) Veröffentlichungstag der Anmeldung: 19.03.2003
(73) Patentinhaber: Hermann Spicher GmbH, 51069 Köln (DE)
(72) Erfinder: SPICHER, Hermann-Josef, 51469 Bergisch Gladbach (DE)
(74) Vertreter: Lippert, Stachow, Schmidt & Partner
(86) Internationale Anmeldenummer: DE0101924
(87) Internationale Veröffentlichungsnummer: WO01089967

(56) Entgegenhaltungen:
- EP-A- 0 193 771
- DE-A- 2 754 609
- US-A- 4 412 293
- US-A- 5 466 085

## Beschreibung

Die Erfindung betrifft eine Vorrichtung zur automatischen einzelnen oder gruppenweisen Entnahme von Gegenständen aus Behältern mittels eines beweglichen Entnahmearms, bestehend aus einem Gestell zum Tragen des Entnahmearms, einer mit dem Gestell verbundenen Halterung mit einer kardanischen Aufhängung für den Entnahmearm, Antrieben zur Verschwenkung des Entnahmearms in verschiedenen, im Winkel zueinander stehenden Ebenen, einer Einrichtung zum axialen Vor- und Zurückfahren des Entnahmearms, einem unterhalb des Entnahmearms vorgesehenen Aufnahmebereich zum Aufstellen von mindestens einem Behälter mit den zu entnehmenden Gegenständen sowie einer Einrichtung zum Führen des Greifteils des Entnahmearms zu verschiedenen Bereichen im Innern des Behälters.

Bei einer bekannten Vorrichtung der genannten Art (EP0143897 B1) besteht das Gestell, welches die Halterung für den Entnahmearm trägt, aus vier Ecksäulen, die in den vier Ecken des Aufnahmebereichs des Behälters angeordnet und über Querstreben miteinander verbunden sind. Die kardanische Aufhängung besteht aus einer horizontalen, schwenkbar gelagerten Tragachse, die im oberen Bereich des Gestells gelagert ist und an der der Entnahmearm über eine schwenkbare Querachse aufgehängt ist. Die Bewegung des Entnahmearms erfolgt über Querspindeln.

Diese bekannte Vorrichtung hat sich bestens bewährt. Mit der Zeit ist es jedoch erforderlich geworden, die Vorrichtung an neue Vorgaben anzupassen.

Eine Vorrichtung zur automatischen Entnahme von Gegenständen aus Behälten ist auch aus der EP-A-0 193 771 bekannt.

Der Erfindung liegt daher die Aufgabe zugrunde, die Leistung der Vorrichtung zu erhöhen und gleichzeitig den vorrichtungstechnischen Aufwand zu reduzieren.

Erfindungsgemäß wird diese Aufgabe dadurch gelöst, dass die Halterung für den Entnahmearm als Schwenkgabel ausgebildet ist, dass die Gabelachse drehbar mit dem Gestell verbunden und über einen gesonderten Motor antreibbar ist, dass an den Gabelschenkeln eine senkrecht zu der Schwenkachse der Gabel verlaufende Tragachse für den Entnahmearm angeordnet ist und dass der Entnahmearm mittels eines Schwenkrahmens auf der an der Schwenkgabel vorgesehenen Tragachse drehbar gelagert und über einen gesonderten Motor antreibbar ist.

Bei der erfindungsgemäßen Vorrichtung ist der Schwenkmechanismus in konstruktiver Hinsicht äußerst einfach und effektiv ausgebildet, so dass die Bewegungen in den einzelnen Ebenen leichter und schneller ausführbar sind.

Bei einer bevorzugten Ausführungsform der Erfindung ist die Schwenkgabel horizontal angeordnet und kann um eine horizontale Schwenkachse gedreht werden.

Bei einer solchen Konstruktion ist es möglich, dass das Gestell auf ein Minimum reduziert wird. Es braucht lediglich auf einer Seite des Behälter-Aufnahmebereichs angeordnet zu sein. Diese Konstruktion bringt den Vorteil, dass der Behälter-Aufnahmebereich von drei Seiten zugänglich ist.

Wenn der Behälter-Aufnahmebereich nur für einen einzigen Behälter vorgesehen sein soll, so kann das Gestell auf einen einzigen Pfosten reduziert werden, an dem die Halterung für den Entnahmearm befestigt ist.

Wenn der Aufnahmebereich dagegen für mehrere Behälter vorgesehen ist, die in einer Reihe nebeneinander angeordnet sind, so weist das Gestell zweckmäßig einen horizontalen Träger auf, an welchem ein die Halterung für den Entnahmearm tragender Laufwagen verschieblich geführt ist. Mit Hilfe des Laufwagens kann der Entnahmearm in abwechselnder Folge oder nacheinander zu den einzelnen Behältern bewegt werden.

Das Gestell ist dabei zweckmäßig portalartig mit zwei im Abstand voneinander angeordneten Pfosten ausgebildet, zwischen denen der Träger angeordnet ist.

Bei einer besonders zweckmäßigen Ausführungsform der Erfindung ist der Motor zum Antreiben der Tragachse des Entnahmearms im Bereich der kardanischen Aufhängung angeordnet. Dadurch wird eine sehr kompakte Bauweise erzielt, die zu geringen Massenträgheitsmomenten führt und somit mittels relativ schwacher Antriebe hohe Leistungen ermöglicht.

Die Einrichtung zum axialen Vor- und Zurückfahren des Entnahmearms ist zweckmäßig als am Schwenkrahmen sitzender Motor ausgebildet. Dieser Motor kann ein Zahnrad antreiben, um das ein am oberen und unteren Ende des Entnahmearms befestigter Zahnriemen geführt ist.

Auch dieser Motor kann im Bereich der kardanischen Aufhängung angeordnet sein, so dass dadurch eine weitere Reduzierung der Massenträgheitsmomente erzielt wird.

Für die nach unten gerichtete Bewegung des Entnahmearms ist ein Freilauf vorgesehen, so dass der Entnahmearm, wenn dieser nach unten fährt, beim Auftreffen auf einen Widerstand sofort stehenbleiben kann.

Die Erfindung ist in der Zeichnung beispielsweise veranschaulicht und im Nachstehenden im einzelnen anhand der Zeichnung beschrieben.

Es zeigen:
- Fig. 1: eine Seitenansicht eines ersten Ausführungsbeispiels der Erfindung,
- Fig. 2: eine Frontansicht der Vorrichtung gemäß Fig. 1,
- Fig. 3: eine Draufsicht auf die Vorrichtung gemäß Fig. 1 und 2,
- Fig. 4: in vergrößerter Darstellung den mittleren Bereich aus Fig. 3,
- Fig. 5: die Seitenansicht einer zweiten Ausführungsform der Erfindung,
- Fig. 6: eine Frontansicht der Vorrichtung gemäß Fig. 5 und
- Fig. 7: eine Draufsicht auf die Vorrichtung gemäß Fig. 5 und 6.

Nach der Zeichnung besteht die automatische Entnahmevorrichtung im wesentlichen aus einem Gestell 1, einem an dem Gestell aufgehängten Entnahmearm 2 sowie einem unterhalb des Entnahmearms 2 vorgesehenen Aufnahmebereich 3 für einen zu entleerenden Behälter 4.

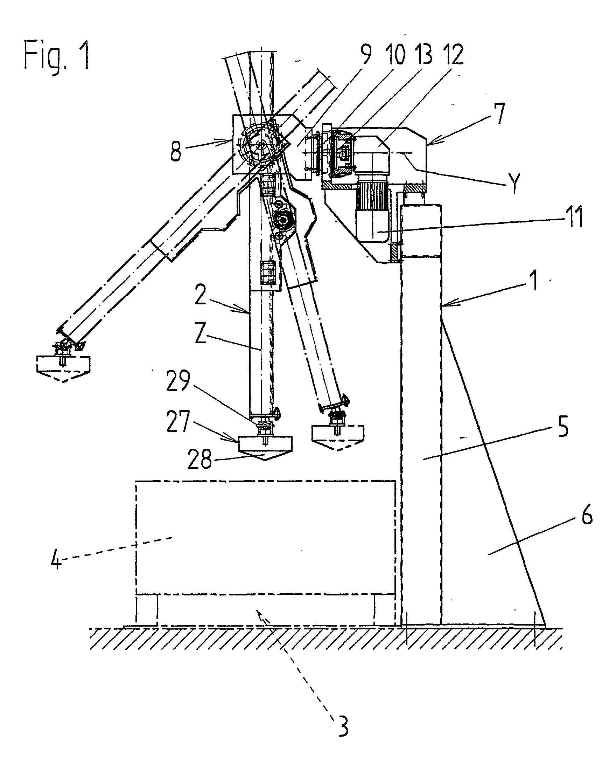

Bei dem in Fig. 1-4 dargestellten Ausführungsbeispiel besteht das Gestell 1 aus einem stationären Pfosten 5, der fest am Boden verankert und auf seiner dem Behälter 4 abgewandten Seite mit einer zusätzlichen seitlichen Stütze 6 stabilisiert ist.

Am oberen Ende des Pfostens 5 sitzt eine fest mit diesem verbundene Konsole 7, die die eigentliche Halterung 8 für den Entnahmearm 2 trägt.

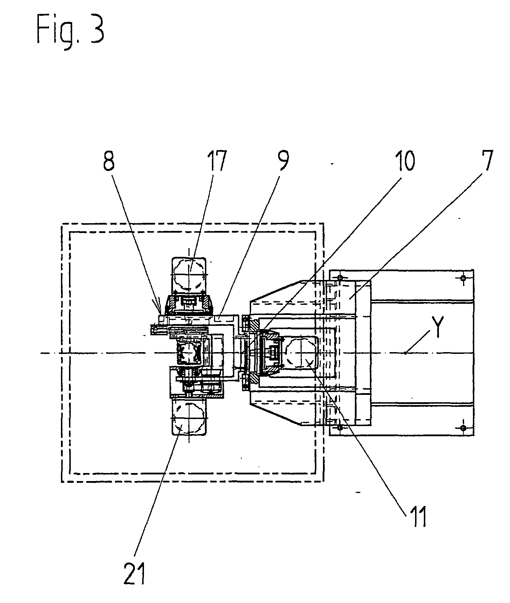

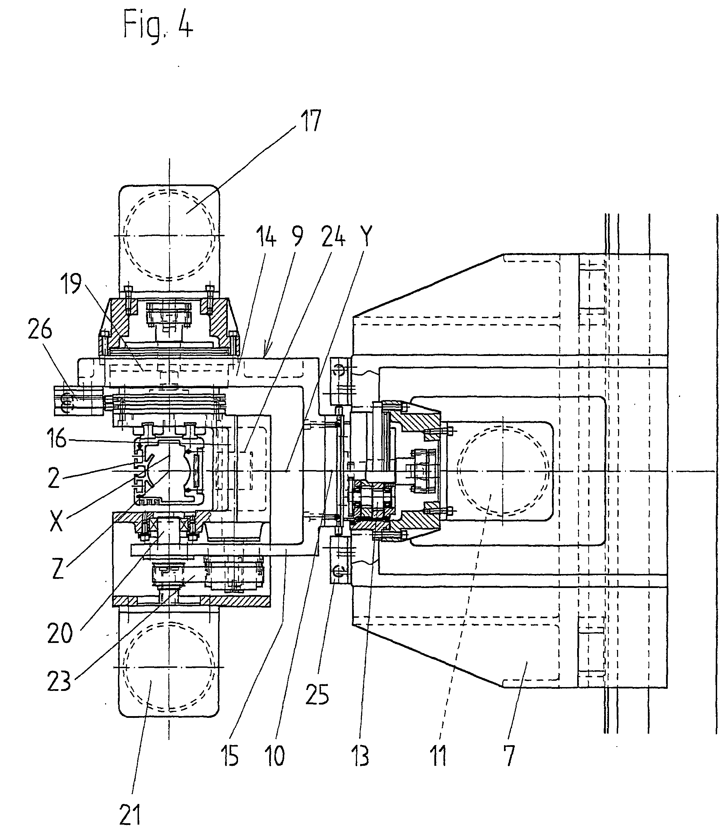

Wie insbesondere aus Fig. 3 und 4 zu erkennen ist, ist die Halterung 8 als Schwenkgabel 9 ausgebildet, deren Achse 10 drehbar an der Konsole 7 gelagert ist. Zum Antrieb der Gabelachse 10 dient ein an der Konsole 7 befestigter Motor 11, der über ein Winkelgetriebe 12 sowie ein hochübersetztes Untersetzungsgetriebe 13 mit der Gabelachse 10 verbunden ist.

Die Gabelachse 10 ist im Folgenden auch als Y-Achse bezeichnet.

Zwischen den beiden Schenkeln 14 und 15 der Schwenkgabel 9 sitzt ein Schwenkrahmen 16, in welchem der Entnahmearm 2 längsverschieblich geführt ist.

Zum Antrieb des Schwenkrahmens 16 dient ein unmittelbar an dem Gabelschenkel 14 dienender Motor 17, mit welchem der Schwenkrahmen 16 unter Zwischenschaltung eines winkelgetriebes 18 sowie eines Untersetzungsgetriebes 19 unmittelbar antreibbar ist. Die Schwenkachse des Schwenkrahmens 16 ist im Folgenden als X-Achse bezeichnet.

Der Schwenkrahmen 16 sitzt motorseitig unmittelbar auf der Ausgangswelle des Untersetzungsgetriebes 19 und ist auf der gegenüberliegenden Seite auf einem an dem Gabelschenkel 15 vorgesehenen Lagerzapfen 20 gelagert.

Der Entnahmearm 2 ist in dem Schwenkrahmen 16 längsverschieblich geführt. Die Längsachse ist im Folgenden als Z-Achse bezeichnet.

Zum Antrieb des Entnahmearms 2 in Richtung der Z-Achse dient ein Motor 21, der über ein Winkelgetriebe 22 sowie ein Zahnriemen-Untersetzungsgetriebe ein Zahnrad 24 antreibt, welches die Bewegung auf den Entnahmearm 2 in Richtung der Z-Achse überträgt.

Als Übertragungsmedium dient im vorliegenden Fall ein in der Zeichnung nicht mehr dargestellter Zahnriemen, der am oberen und unteren Ende des Entnahmearms 2 befestigt ist und um das Zahnrad 24 herumgeführt ist.

Alternativ könnte das Zahnrad 24 auch mit einer an dem Entnahmearm vorgesehenen Zahnstange zusammenwirken.

Während der Motor 11, der zur Betätigung der Schwenkgabel 9 um die Y-Achse dient, fest an der Konsole 7 sitzt, müssen der Motor 17, der zur Verschwenkung des Schwenkrahmens 16 um die X-Achse dient, und der Motor 21, der den Entnahmearm 2 in Längsrichtung, also entlang der Z-Achse, bewegt, die Bewegungen der Schwenkgabel 9 mitmachen.

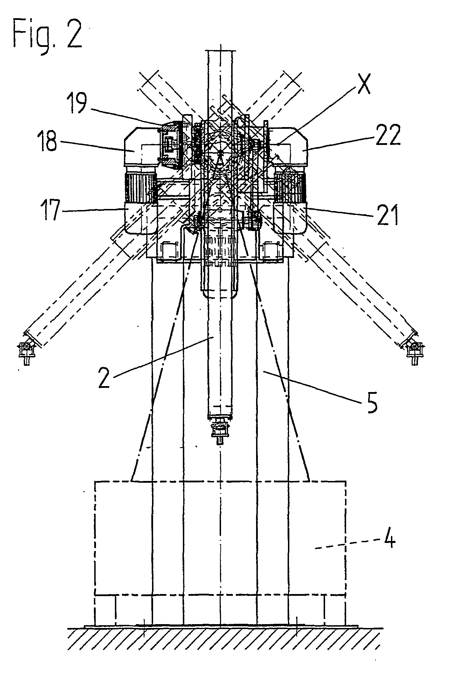

Um die Trägheitsmomente gering zu halten, sind die mitbewegten Motoren 17 und 21 so nahe wie möglich an dem kardanischen Punkt angeordnet. Wie insbesondere aus den Figuren 2 bis 4 zu erkennen ist, sind die Motoren 17 und 21 bei horizontaler Grundstellung der Schwenkgabel 9 vertikal angeordnet, d.h., dass die Massen dieser Motoren sehr nahe an der Gabel 9 und damit an dem kardanischen Punkt liegen.

Aufgrund dieser sehr geschickten Anordnung der Motoren entsteht nicht nur eine sehr kompakte Bauweise der Vorrichtung, sondern die Massenträgheitsmomente werden auch sehr klein gehalten, so dass bei der Betätigung Bewegungen mit hoher Beschleunigung bzw. Verzögerung möglich sind.

Die Endstellungen sämtlicher schwenkenden Bauteile sind durch Endschalter 25 bzw. 26 begrenzt.

In Richtung der Längsbewegung des Entnahmearms 2 sorgt ein in der Zeichnung nicht näher dargestellter Freilauf für ein schlupffreies Nachlaufen des Entnahmearms in der Abwärtsbewegung. In der Aufwärtsbewegung nimmt der Freilauf den Entnahmearm 2 in Richtung der Z-Achse schlupffrei mit.

Am unteren Ende des Entnahmearms 2 ist ein Greifteil 27 angeordnet, welches an die jeweilige Form und Eigenschaft der zu entnehmenden Gegenstände angepasst ist. In dem in der Zeichnung dargestellten Ausführungsbeispiel ist das Greifteil 27 als magnetischer Kopf 28 ausgebildet, der am unteren Ende des Entnahmearms 2 mittels eines Kardangelenks 29 aufgehängt ist. Der magnetische Kopf 28 weist somit immer senkrecht nach unten.

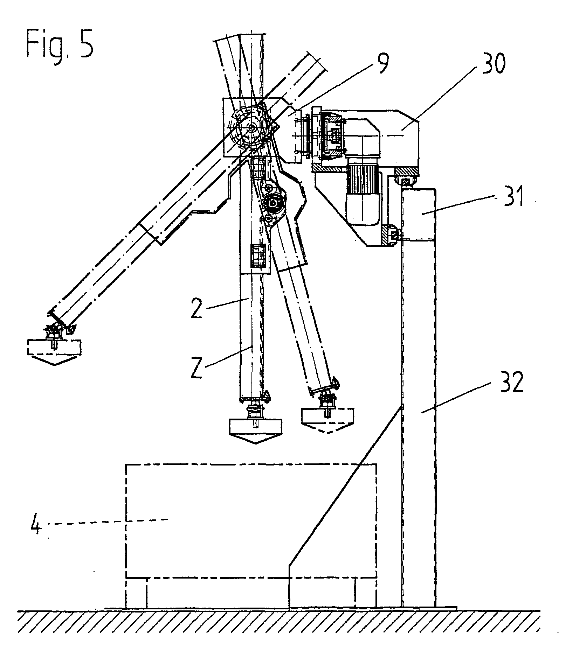

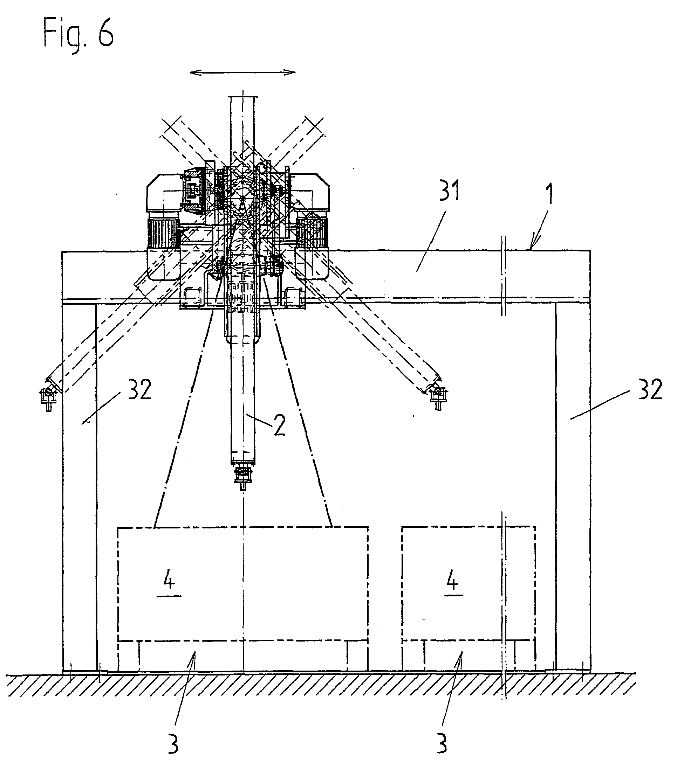

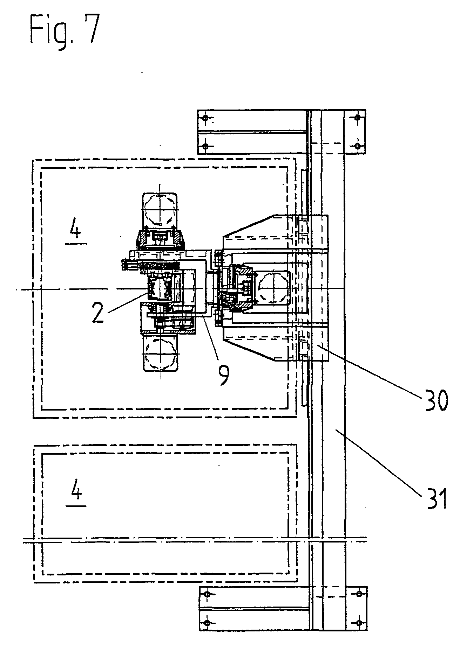

Das in Fig. 5-7 dargestellte Ausführungsbeispiel ist zur Entleerung mehrerer Behälter 4 ausgelegt. Der Entnahmearm 2 ist in gleicher Weise konstruiert wie bei dem ersten Ausführungsbeispiel und auch die Antriebe können identisch ausgebildet sein. Im Folgenden werden für entsprechende Bauteile die gleichen Positionszahlen verwendet wie bei dem Ausführungsbeispiel gemäß Fig. 1-4.

Ebenso wie bei dem in Fig. 1-4 dargestellten Ausführungsbeispiel ist der Entnahmearm 2 in einer Schwenkgabel 9 gelagert, die an einer Konsole befestigt ist. Im Gegensatz zu dem erstbeschriebenen Ausführungsbeispiel ist die Konsole jedoch nicht fest an einem Pfosten angeordnet, sondern ist als Laufwagen 30 ausgebildet, der an einem horizontalen Träger 31 verfahrbar geführt ist. Der Träger 31 ist dabei an zwei im Abstand voneinander angeordneten Pfosten 32 befestigt, so dass ein portalartiges Gestell gebildet wird, vor welchem zwei oder mehr Behälter 4 in entsprechend vorgesehenen Behälter-Aufnahmebereichen 3 abgestellt werden können. Der Entnahmearm wird dann je nach dem vorgeschriebenen Entladetakt zu den einzelnen Behältern 4 verfahren.

Die entsprechende Bauweise des Gestells 1 erlaubt es bei beiden beschriebenen Ausführungsformen, dass der Aufnahmebereich des Behälters von drei Seiten aus zugänglich ist. Ein in der Zeichnung nicht näher dargestellter Rammschutz dient als Abschirmung des Gestells sowie der Behälter.

Bei größeren Einheiten ist es selbstverständlich auch möglich, mehrere Entnahmearme gleichzeitig an dem Träger 31 zu lagern.

### Bezugszeichenliste

- 1: Gestell
- 2: Entnahmearm
- 3: Aufnahmebereich
- 4: Behälter
- 5: Pfosten
- 6: Stütze
- 7: Konsole
- 8: Halterung
- 9: Schwenkgabel
- 10: Gabelachse
- 11: Motor
- 12: Winkelgetriebe
- 13: Untersetzungsgetriebe
- 14: Gabelschenkel
- 15: Gabelschenkel
- 16: Schwenkrahmen
- 17: Motor (für Schwenkrahmen)
- 18: Winkelgetriebe
- 19: Untersetzungsgetriebe
- 20: Lagerzapfen
- 21: Motor (für Zahnrad)
- 22: Winkelgetriebe
- 23: Zahnriemen-Untersetzungsgetriebe
- 24: Zahnrad
- 25: Endschalter
- 26: Endschalter
- 27: Greifteil
- 28: magnetischer Kopf
- 29: Kardangelenk
- 30: Laufwagen
- 31: Träger
- 32: Pfosten

## Patentansprüche

1. Vorrichtung zur automatischen einzelnen oder gruppenweisen Entnahme von Gegenständen aus Behältern (4) mittels eines beweglichen Entnahmearms (2), bestehend aus einem Gestell (1) zum Tragen des Entnahmearms (2), einer mit dem Gestell (1) verbundenen Halterung (8) mit einer kardanischen Aufhängung für den Entnahmearm (2), Antrieben zur Verschwenkung des Entnahmearms (2) in verschiedenen, im Winkel zueinander stehenden Ebenen, einer Einrichtung zum axialen Vor- und Zurückfahren des Entnahmearms (2), einem unterhalb des Entnahmearms (2) vorgesehenen Aufnahmebereich (3) zum Aufstellen von mindestens einem Behälter (4) mit den zu entnehmenden Gegenständen sowie einer Einrichtung zum Führen des Greifteils (27) des Entnahmearms (2) zu verschiedenen Bereichen im Innern des Behälters (4), **dadurch gekennzeichnet, dass** die Halterung (8) für den Entnahmearm (2) als Schwenkgabel (9) ausgebildet ist, dass die Gabelachse (10) drehbar mit dem Gestell (1) verbunden und über einen gesonderten Motor (11) antreibbar ist, dass an den Gabelschenkeln (14, 15) eine senkrecht zu der Schwenkachse der Gabel (9) verlaufende Tragachse für den Entnahmearm (2) angeordnet ist und dass der Entnahmearm (2) mittels eines Schwenkrahmens (16) auf der an der Schwenkgabel (9) vorgesehenen Tragachse drehbargelagert und der Schwenkrahmen (16) über einen gesonderten Motor (17) antreibbar ist.

2. Vorrichtung nach Anspruch 1, **dadurch gekennzeichnet, dass** die Schwenkgabel (9) horizontal angeordnet ist.

3. Vorrichtung nach Anspruch 2, **dadurch gekennzeichnet, dass** das Gestell (1) auf einer Seite des Behälter-Aufnahmebereichs (3) angeordnet ist.

4. Vorrichtung nach Anspruch 2 oder 3, **dadurch gekennzeichnet, dass** das Gestell als Pfosten (5) ausgebildet ist.

5. Vorrichtung nach Anspruch 2 oder 3, **dadurch gekennzeichnet, dass** das Gestell einen horizontalen Träger (31) aufweist, an welchem ein die Halterung für den Entnahmearm (2) tragender Laufwagen (30) verschieblich geführt ist.

6. Vorrichtung nach Anspruch 5, **dadurch gekennzeichnet, dass** das Gestell portalartig mit zwei im Abstand voneinander angeordneten Pfosten (32) ausgebildet ist, zwischen denen der Träger (31) angeordnet ist.

7. Vorrichtung nach einem der Ansprüche 1 bis 6, **dadurch gekennzeichnet, dass** der Motor (17) zum Antreiben der Tragachse des Entnahmearms (2) im Bereich der kardanischen Aufhängung angeordnet ist.

8. Vorrichtung nach einem der Ansprüche 1 bis 7, **dadurch gekennzeichnet, dass** die Einrichtung zum axialen Vor- und Zurückfahren des Entnahmearms (2) als am Schwenkrahmen (16) sitzender Motor (21) ausgebildet ist.

9. Vorrichtung nach Anspruch 8, **dadurch gekennzeichnet, dass** der Motor (21) ein Zahnrad (24) antreibt, um das ein am oberen und unteren Ende des Entnahmearms (2) befestigter Zahnriemen geführt ist.

10. Vorrichtung nach Anspruch 8 oder 9, **dadurch gekennzeichnet, dass** der Motor (21) im Bereich der kardanischen Aufhängung angeordnet ist.

11. Vorrichtung nach einem der Ansprüche 8-10, **dadurch gekennzeichnet, dass** für die nach unten gerichtete Bewegung des Entnahmearms (2) ein Freilauf vorgesehen ist.

## Claims

1. Device for the automatic removal, individually or in groups, of objects from containers (4) by means of a moveable removal arm (2), which device comprises a frame (1) for carrying the removal arm (2), a holding device (8) which is connected to the frame (1) and which has a gimbal suspension for the removal arm (2), drive mechanisms for pivoting the removal arm (2) in various planes which are located at an angle relative to each other, a device for axially moving the removal arm (2) forwards and backwards, a receiving region (3), which is provided under the removal arm (2) for mounting at least one container (4) with the objects to be removed, and a device for guiding the gripping element (27) of the removal arm (2) to various regions inside the container (4), **characterised in that** the holding device (8) for the removal arm (2) is in the form of a pivot fork (9), **in that** the fork axis (10) is rotatably connected to the frame (1) and can be driven by means of a separate motor (11), **in that** a carrying axis for the removal arm (2) is arranged on the fork members (14, 15), which axis extends in a perpendicular manner relative to the pivot axis of the fork (9), and **in that** the removal arm (2) is rotatably mounted by means of a pivot frame (16) on the carrying axis provided on the pivot fork (9) and the pivot frame (16) can be driven by means of a separate motor (17).

2. Device according to claim 1, **characterised in that** the pivot fork (9) is arranged in a horizontal manner.

3. Device according to claim 2, **characterised in that** the frame (1) is arranged at one side of the container-receiving region (3).

4. Device according to claim 2 or claim 3, **characterised in that** the frame is in the form of a post (5).

5. Device according to claim 2 or claim 3, **characterised in that** the frame has a horizontal carrier (31) on which a carriage (30), which carries the holding device for the removal arm (2), is guided in a displaceable manner.

6. Device according to claim 5, **characterised in that** the frame is of portal-like form having two posts (32) which are arranged with spacing from each other and between which the carrier (31) is arranged.

7. Device according to any one of claims 1 to 6, **characterised in that** the motor (17) for driving the carrying axis of the removal arm (2) is arranged in the region of the gimbal suspension.

8. Device according to any one of claims 1 to 7, **characterised in that** the device for axially moving the removal arm (2) forwards and backwards is in the form of a motor (21) which is supported on the pivot frame (16).

9. Device according to claim 8, **characterised in that** the motor (21) drives a toothed wheel (24), about which a toothed belt is guided which is fixed to the upper and lower end of the removal arm (2).

10. Device according to claim 8 or claim 9, **characterised in that** the motor (21) is arranged in the region of the gimbal suspension.

11. Device according to any one of claims 8 to 10, **characterised in that** a free-wheeling action is provided for the downwardly directed movement of the removal arm (2).

## Revendications

1. Dispositif pour le prélèvement automatique, individuel ou groupé d'objets dans des conteneurs (4) au moyen d'un bras de prélèvement (2) mobile, comprenant un bâti (1) pour porter le bras de prélèvement (2), une fixation (8) reliée au bâti (1), avec une suspension à cardan pour le bras de prélèvement (2), les entraînements pour le basculement du bras de prélèvement (2) dans différents plans disposés à angle droit de façon réciproque, un dispositif pour l'avancement et le recul axial du bras de prélèvement (2), une zone de réception (3) prévue au-dessous du bras de prélèvement (2) pour l'installation d'au moins un conteneur (4) avec les objets à prélever et un dispositif pour le guidage de la partie de préhension (27) du bras de prélèvement (2) vers différentes zones à l'intérieur du conteneur (4), **caractérisé en ce que** la fixation (8) pour le bras de prélèvement (2) est conçue comme une fourche orientable (9), **en ce que** l'axe de la fourche (10) est relié de façon rotative au bâti (1) et peut être entraîné au moyen d'un moteur (11) séparé, **en ce qu'**un axe support, agencé perpendiculairement à l'axe de basculement de la fourche (9), est disposé sur les branches de la fourche (14, 15) pour le bras de prélèvement (2) et **en ce que** le bras de prélèvement (2) est logé de façon pivotante au moyen d'un cadre pivotant (16) sur l'axe support prévu sur la fourche orientable (9) et le cadre pivotant (16) peut être entraîné au moyen d'un moteur (17) séparé.

2. Dispositif selon la revendication 1, **caractérisé en ce que** la fourche orientable (9) est disposée horizontalement.

3. Dispositif selon la revendication 2, **caractérisé en ce que** le bâti (1) est disposé sur un côté de la zone de réception du conteneur (3).

4. Dispositif selon la revendication 2 ou 3, **caractérisé en ce que** le bâti est conçu comme un poteau (5).

5. Dispositif selon la revendication 2 ou 3, **caractérisé en ce que** le bâti présente un support (31) horizontal, sur lequel un chariot mobile (30) portant le support pour le bras de prélèvement (2) est guidé de façon coulissante.

6. Dispositif selon la revendication 5, **caractérisé en ce que** le bâti est réalisé en forme de portail avec deux poteaux (32) disposés à distance l'un de l'autre, entre lesquels le support (31) est disposé.

7. Dispositif selon l'une quelconque des revendications 1 à 6, **caractérisé en ce que** le moteur (17) est disposé pour l'entraînement de l'axe support du bras de prélèvement (2) dans la zone de la suspension à cardan.

8. Dispositif selon l'une quelconque des revendications 1 à 7, **caractérisé en ce que** le dispositif pour l'avancement et le recul axial du bras de prélèvement (2) est réglé comme un moteur (21) logé sur le cadre pivotant (16).

9. Dispositif selon la revendication 8, **caractérisé en ce que** le moteur (21) entraîne une roue dentée (24) autour de laquelle est guidée une courroie crantée fixée sur l'extrémité supérieure et l'extrémité inférieure du bras de prélèvement (2).

10. Dispositif selon la revendication 8 ou 9, **caractérisé en ce que** le moteur (21) est disposé dans la zone de la suspension à cardan.

11. Dispositif selon l'une quelconque des revendications 8 à 10, **caractérisé en ce qu'**il est prévu une course libre pour le mouvement, dirigé vers le bas, du bras de prélèvement (2).
